Europäisches Patentamt

European Patent Office

Office européen des brevets

(19)

(11) Veröffentlichungsnummer: **0 030 913**
**B1**

(12) **EUROPÄISCHE PATENTSCHRIFT**

(45) Veröffentlichungstag der Patentschrift:
**18.05.83**

(21) Anmeldenummer: **80710030.0**

(22) Anmeldetag: **16.12.80**

(51) Int. Cl.³: **F 28 F 25/08,** F 28 C 1/02

(54) Vorrichtung zum Abkühlen von Kühlwasser.

(30) Priorität: **17.12.79 DE 2950803**

(43) Veröffentlichungstag der Anmeldung:
**24.06.81 Patentblatt 81/25**

(45) Bekanntmachung des Hinweises auf die Patenterteilung:
**18.05.83 Patentblatt 83/20**

(84) Benannte Vertragsstaaten:
**BE FR GB**

(56) Entgegenhaltungen:
**DE-A-2 001 539**
**DE-A-2 250 912**
**DE-A-2 527 143**
**DE-A-2 532 544**
**DE-A-2 739 627**
**DE-A-2 808 821**
**DE-C-213 949**
**GB-A-990 851**
**GB-A-1 158 766**
**GB-A-1 559 330**

(73) Patentinhaber: **Ernst, Günter, Prof. Dr.-Ing., 57, Strasse des Roten Kreuzes, D-7500 Karlsruhe 41 (DE)**

(72) Erfinder: **Günter, Ernst, Prof. Dr.-Ing., Strasse des Roten Kreuzes 75, D-7500 Karlsruhe 41 (DE)**
Erfinder: **Wurz, Diter, Prof.-Dr.-Ing., Steinweg 48, D-7507 Pfinztal-Söllingen (DE)**

(74) Vertreter: **Liesegang, Roland, Dr.-Ing., Sckellstrasse 1, D-8000 München 80 (DE)**

Vorrichtung zum Abkühlen von Kühlwasser

Die Erfindung betrifft eine Vorrichtung zum Abkühlen von Kühlwasser, insbesondere in Kühltürmen, mit im wesentlichen parallel angeordneten Rieselplatten, auf deren einen Seiten, – den Nassseiten –, oben aufgesprühtes Wasser nach unten rieselt und deren andere Seiten, – die Trockenseiten –, trockengehalten sind, wobei jeweils benachbarte Rieselplatten Strömungskanäle zwischen sich bilden, durch die kühlende Luft strömt.

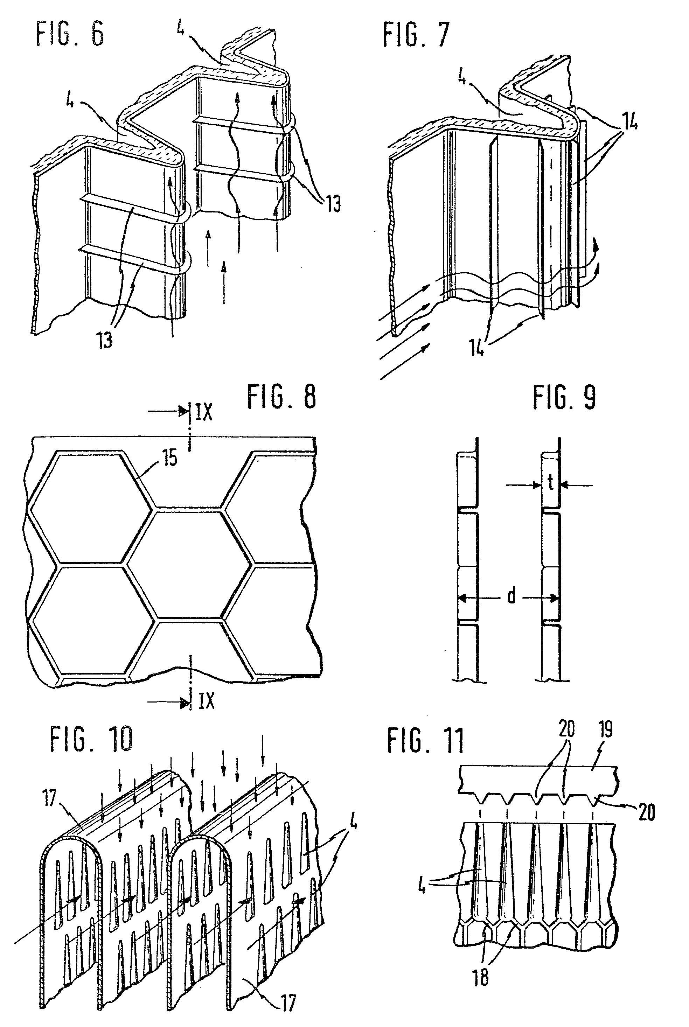

Bei einer bekannten Vorrichtung dieser Art ist unter anderem der Vorschlag gemacht, dass die Rieselplatten mit zu der Nassseite hinweisenden Einbuchtungen versehen sind (DE–A–25 32 544, Fig. 6). Mit diesen Einbuchtungen soll die Nassfläche verkleinert werden, weil das in den Vertiefungen zwischen den Einbuchtungen herabströmende Wasser die Einbuchtungen auf der Nassseite zum Teil trocken lässt. Diese Massnahme ist jedoch nicht wirkungsvoll, weil damit die auf die trockene Seite übertragene Wärme verringert wird.

Bei einer anderen bekannten Vorrichtung der eingangs genannten Art sind in die Nassseiten sogenannte «Tropfnasen» zu den Trockenseiten hin eingebuchtet (DE–A–25 32 544, Fig. 7). Diese Tropfnasen sollen auf die Trockenseite gelangtes Spritzwasser abtropfen lassen. Die Tropfnasen erhöhen die Trockenfläche nicht in nennenswertem Masse. Sie sind jeweils durch horizontal verlaufende Knicke verbunden. Diese quer zur Luft- und Wasserströmung verlaufenden Knicke erzeugen Turbulenzen, welche den Wärme- und Stoffübergang auf der Nassseite und damit den Nasskühlanteil gegenüber dem Trockenkühlanteil erhöhen.

Es ist bekannt (DE–B–22 50 912), bei in wabenförmigen Blöcken zusammengefassten Rieselplatten Einbuchtungen bzw. Rinnen vorzusehen, welche die Bildung sogenannter «Zwickelflüssigkeit» in den Zwickeln der wabenförmigen Blöcke vermeiden helfen sollen.

Es ist auch schon bekannt, Rieselplatten für sogenannte Nass-Kühltürme, bei denen beide Seiten der Rieselplatten befeuchtet werden, mit Versteifungen zu versehen, um die Stabilität der Rieselplatten-Anordnung in den Einbauten des Kühlturms zu verbessern.

Der Erfindung liegt die Aufgabe zugrunde, bei einer Vorrichtung der eingangs genannten Art das Verhältnis des Trockenkühlanteils gegenüber dem Nasskühlanteil zu erhöhen. Eine Vergrösserung des Trockenkühlanteils ist anzustreben, um die bei Nasskühlung entstehende Umweltbelastung durch den aus dem Kühlturm austretenden Schwaden möglichst klein zu halten, mit anderen Worten die Schwadenbildung möglichst zu verringern. Ein allein mit Trockenkühlung arbeitender Kühlturm wäre andererseits wegen der dann erforderlichen komplizierten Wärmetauscher (Rippenrohre) zu aufwendig und zu wenig effektiv. Dies ist der technologische Hintergrund der Aufgabe, den Trockenkühlanteil bei einer Vorrichtung der eingangs genannten Art zu erhöhen.

Zur Lösung dieser Aufgabe ist gemäss der Erfindung vorgesehen, dass die Rieselplatten mit Rinnen versehen sind, die aus der Nassseite heraus zur Trockenseite hin eingebuchtet sind, wobei die Trockenfläche um die Fläche der Rinnenaussenwände vergrössert wird.

Die Vergrösserung der Trockenfläche schafft die erwünschte Vergrösserung des Trockenkühlanteils im Vergleich zum Nasskühlanteil.

Die Rinnen werden auf der Nassseite ebenfalls von der strömenden Wasserschicht überdeckt. Diese Rinnen können so eng sein, dass sich ein zusammenhängender Wasserfilm auf der Nassseite ausbildet, wobei die Einbuchtungen ganz mit Wasser gefüllt sind. Die Nasskühlfläche ist dann um den Flächeninhalt der Einbuchtungen gegenüber der Trockenseite verringert, aus der die Rinnen die Gesamtfläche der Trockenseite vergrössernd vorkragen.

Wenn die Rinnen aber nicht so eng sind, dass sie von einem zusammenhängenden Wasserfilm «verschlossen» werden, dann wird insbesondere bei Anwendung des Gegenstromprinzips, bei dem die Luft entgegen dem herabrieselnden Wasser nach oben strömt, ein Teil der Luft in den Rinnen aufgrund der Reibung am Hochströmen gehindert. Dies verringert insgesamt den Strömungsdurchsatz der Luft auf der Nassseite und verringert somit ebenfalls den Anteil der Nasskühlung im Vergleich zur Kühlung auf der Trockenseite.

Vorzugsweise sind die Rinnen parallel und vertikal mit einer Länge zwischen 30 und 300 mm vorgesehen. Die Rinnenlänge ist deshalb in der genannten Weise begrenzt, weil das Wasser sich bei zu grosser Rinnenlänge in den Rinnen zu sehr abkühlen würde, so dass die Rinnen kühler als die übrigen Flächen auf der Nassseite würden, was der gewünschten Wirkung abträglich wäre. Bei Begrenzung der Rinnenlänge und/oder der Anordnung von mehreren Rinnengruppen übereinander mit seitlichem Versatz in jeder Rieselplatte wird erreicht, dass immer neues Wasser in immer neue Rinnen läuft, so dass ein intensiver Wärmeaustausch durch die Rinnenwand hindurch stattfindet.

Es ist vorteilhaft, wenn die Rinnen sich nach unten hin derart erweitern, dass ihre grösste Rinnenbreite am unteren Ende in der Grössenordnung des 1,5-fachen der kleinsten Rinnenbreite am oberen Ende beträgt. Die Rinne hat dann in der Ansicht gesehen bevorzugt Keulengestalt. Aufgrund dieser Gestaltung ist erreicht, dass eine Verstopfung der Rinne vorgebeugt ist.

Um eine vollständige Füllung der Einbuchtungen bzw. Rinnen auf der Nassseite mit Wasser zu erreichen, wird deren Breite zweckmässig im Bereich zwischen 1 und 5 mm, vorzugsweise bei 2 mm, gewählt. Hierbei wird die vollständige Füllung aufgrund der Kapillarwirkung des Wassers erreicht. Die Nasskühlung wird entsprechend dem auf der Nasskühlseite an einem Stoff- und Wärmeaustausch zwischen Luft und Wasser nun nicht mehr teilnehmenden Flächenbereich innerhalb der Einbuchtungen verringert und der Trockenkühlanteil entsprechend vergrössert.

Die Rinnentiefe wird dabei zweckmässig so gewählt, dass sie bei Anordnung der Rinnen parallel zum Luftstrom in der Grössenordnung zwischen 5 und 50 mm und bei Anordnung der Rinnen quer zum Luftstrom in der Grössenordnung bis zu 7 mm beträgt, wobei der Abstand zur benachbarten Platte um bis zum Doppelten der genannten Tiefenmasse grösser sein kann. Der Abstand von den Scheiteln oder Gründen der Einbuchtungen von der benachbarten Rieselplatte sollte aber mindestens der üblichen Wasserfilmstärke entsprechen, derart, dass der Wasserfilm auf der Nassseite ungestört herabrieseln kann.

Der genannte Abstand sollte wesentlich grösser als die Rinnentiefe in solchen Fällen sein, bei denen die Rinnen quer zum Luftstrom aus der Trokkenseite vorragen. Grund hierfür ist, dass sich bei einer derartigen Anordnung der Rinnen Turbulenzen ausbilden, die auf der Trockenseite zwar für eine intensive Trockenkühlung günstig sind, von der Nassseite aber zur Verminderung des Nasskühleffektes ferngehalten werden sollten.

Die Rinnen können auch horizontal angeordnet sein. In diesem Fall ist bevorzugt, wenn die unteren Seitenwände der horizontalen Rinnen gegenüber den oberen Seitenwänden zur Bildung einer Auffangfläche für von oben herabrieselndes Wasser vorspringen. Dies bedingt, dass die beispielsweise ebenen Zwischenflächen zwischen den unteren Seitenwänden und den oberen Seitenwänden einen Überhang bilden.

Die Rinnen von übereinander angeordneten Rinnengruppen können seitlich zueinander versetzt sein, und die übereinander angeordneten Rinnengruppen können auch miteinander verbunden sein.

Besonders bevorzugt ist in diesem Zusammenhang eine Anordnung der Rinnen in einem Wabenmuster, wobei die Rinnentiefe insgesamt geringer als bei in Richtung des Luftstroms angeordneten Rinnen, beispielsweise in der Grössenordnung von 5 mm, gewählt ist.

Die Einbuchtungen bzw. Rinnen nach der Erfindung können jeweils zur gleichen Seite hin gerichtet sein, derart, dass jeweils die mit den vorkragenden Einbuchtungen versehene Trockenseite der ebenen Nassseite der benachbarten Rieselplatte gegenüberliegt. In diesem Fall ist jeder Strömungskanal zwischen zwei benachbarten Rieselplatten von einer trockenen und einer nassen Wand begrenzt.

Bei Anwendung des Querstromprinzips kann es jedoch hinsichtlich einer einfachen Berieselung günstig sein, wenn die Nassseiten und die Trockenseiten der Rieselplatten jeweils einander zugewandt sind. Dies ermöglicht nämlich eine Ausbildung der Rieselplatten jeweils paarweise in Form von auf dem Kopf stehenden, also nach oben geschlossenen U-Profilen, wobei die U-Schenkel vertikal angeordnet sind und die dem U-Inneren zugewandten Seiten dieser Schenkel trocken und die Aussenseiten der Schenkel nass sind, wie an sich bekannt.

Bei einer Anordnung, bei welcher sämtliche, zwischen den Rieselplatten gebildeten Kanäle nach oben hin offen sind, können natürlich auch bekannte Massnahmen zur Berieselung nur einer Seite der Rieselplatten getroffen werden, beispielsweise die Neigung des obersten Bereiches der Rieselplatte und die Anordnung der benachbarten Rieselplatten in einem geeigneten Abstand derart, dass bei Berieselung senkrecht von oben nur die jeweils einen Seiten der Rieselplatten befeuchtet werden. Es ist auch denkbar, oberhalb der Rieselplatten Kämme mit Tropfnasen anzuordnen, die in vertikaler Fluchtung mit den obersten Rinnen der darunter angeordneten Rieselplatten stehen.

Die Erfindung ist im folgenden anhand schematischer Zeichnungen mit weiteren Einzelheiten an Ausführungsbeispielen näher erläutert. Es zeigen:

Fig. 1 eine perspektivische Ansicht einer Rieselplattenanordnung, von der nur die oberen Enden zweier paralleler Rieselplatten mit im wesentlichen vertikal verlaufenden Rinnen ausschnittsweise dargestellt sind;

Fig. 2 einen Horizontalschnitt durch die Rieselplattenanordnung nach Fig. 1;

Fig. 3 eine Seitenansicht einer Rieselplatte mit übereinander angeordneten Gruppen vertikaler Rinnen begrenzter Länge;

Fig. 4 einen Teilquerschnitt durch eine Rieselplatte mit breiteren Rinnen als die bisher beschriebenen Ausführungen;

Fig. 5 einen Vertikalschnitt durch eine Rieselplatte mit horizontalen Rinnen, deren untere Seitenwände über die oberen Seitenwände hinausragen;

Fig. 6 und 7 perspektivische Teilansichten von Rieselplatten mit Rinnen, die auf ihrer Trockenseite mit turbulenzerzeugenden Rippen versehen sind;

Fig. 8 eine Teilansicht einer Rieselplatte mit einer wabenförmigen Rinnenanordnung;

Fig. 9 einen Teilschnitt durch zwei benachbarte Rieselplatten nach der Linie IX–IX in Fig. 8;

Fig. 10 eine perspektivische Teilansicht einer Rieselplattenausbildung gemäss der Erfindung für die Anwendung des Querstromprinzips mit besonders einfacher Berieselung;

Fig. 11 eine Teilansicht auf eine Anordnung einer Berieselungsvorrichtung für eine erfindungsgemäss gestaltete Rieselplatte.

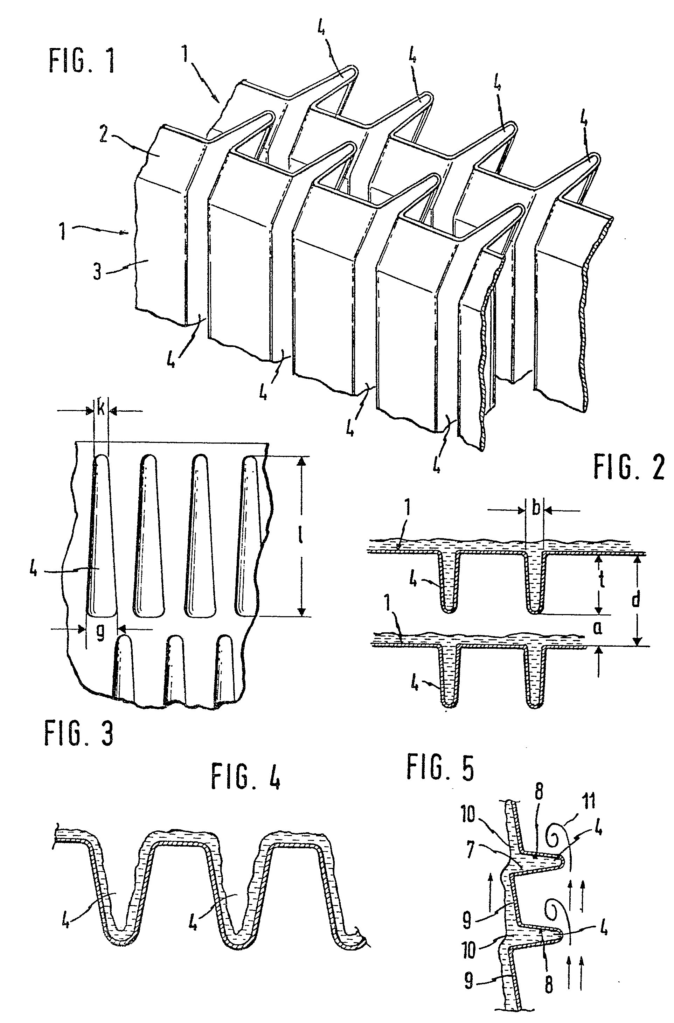

Die Rieselplattenanordnung nach Fig. 1 umfasst mehrere Rieselplatten 1, von denen in Fig. 1 zwei gezeigt sind. In ihrem oberen Bereich 2 sind die Rieselplatten gegenüber der Vertikalen geneigt, um eine einseitige Befeuchtung durch senkrecht von oben herabrieselndes Wasser nur auf der in Fig. 1 dargestellten Vorderseite, der Nassseite, zu bewirken. Im unteren Bereich 3 laufen die Rieselplatten vertikal. Es ist natürlich aber auch eine Anordnung denkbar, bei welcher die Rieselplatten schräg stehen, also über ihre ganze Höhe bzw. Breite eine Neigung wie der Bereich 2 haben. Die Anordnung der Platten (Neigung und Abstand) ist zweckmässig so getroffen, dass nur die einen Plattenseiten befeuchtet werden und dass kein Wasser ungenutzt zwischen den Platten hindurchfällt.

Die Rieselplatten sind mit vertikal verlaufenden Rinnen 4 versehen, die in regelmässigen Abständen aus der Nassseite heraus zur Trockenseite hin eingebuchtet sind.

Die Schnittdarstellung in Fig. 2 verdeutlicht die Anordnung; insbesondere die Abmessungen, wobei vorausgesetzt ist, dass der Luftstrom bei diesem Ausführungsbeispiel entgegengesetzt zum herabrieselnden Wasser, also in Längsrichtung der Rinnen 4, nach oben strömt.

Die Rinnen 4, die sich zu ihrem Scheitel hin verjüngen, haben eine mittlere freie Rinnenbreite zwischen 1 und 5 mm, vorzugsweise 2 mm. Bei einer solchen Rinnenbreite ist gewährleistet, dass an den Rieselplatten auf der Nassseite herabströmendes Wasser, wie es in Fig. 2 angedeutet ist, die Rinnen 4 vollständig ausfüllt. Infolgedessen können die Rinneninnenwände nicht dazu ausgenutzt werden, zum Wärmeaustausch zwischen dem Wasser und der im Gegenstrom strömenden Luft beizutragen. Die Rinnenaussenwände vergrössern dagegen um ihre zusätzliche Fläche die Trockenseite, in Fig. 2 jeweils die untere Seite der Rieselplatte 1.

Aus Fig. 2 ergeben sich weitere wichtige Abmessungen der Rinnen 4. So sollten diese Rinnen einen Abstand a zur gegenüberliegenden Rieselplatte lassen, der eine ungestörte Strömung des Wassers in üblicher Filmstärke zulässt, in der Praxis mindestens einen Abstand a von 5 mm. Die Rinnentiefe t beträgt in der Praxis zweckmässig zwischen 5 und 50 mm. Der Abstand a liegt in der Praxis zweckmässig zwischen 5 und 20 mm. Aus diesen beiden Massen folgt dann der Gesamtabstand d zwischen zwei benachbarten Rieselplatten.

Es ist ersichtlich, dass die Rieselplattenanordnung auch derart berieselt werden kann, dass eine solche Wassermenge aufgesprüht wird, die gerade ausreicht, die Rinnen 4 zu füllen. In diesem Fall ist der Nasskühlteil zugunsten des Trockenkühlanteils noch erheblich mehr herabgesetzt.

Die Ausführung nach Fig. 3 macht deutlich, dass die der Einfachheit halber wieder mit dem Bezugszeichen 4 bezeichneten Rinnen zweckmässig eine begrenzte Länge 1 in der Grössenordnung zwischen 50 und 300 mm haben können. Wenn man berücksichtigt, dass in der Praxis die Rieselplatten grosser Kühltürme Breiten zwischen 0,5 und 2 mm haben können, so wird deutlich, dass man dann zweckmässig mehrere Gruppen von Rinnen übereinander in jeder Rieselplatte vorsieht. Diese Gruppen werden, wie Fig. 3 zeigt, zweckmässig seitlich zueinander versetzt angeordnet. Dadurch wird erreicht, dass auch zwischen den obersten Rinnen 4 in Fig. 3 abfliessendes Wasser anschliessend auf darunter angeordnete Rinnen 4 trifft, so dass immer neues Wasser in die Rinnen beim Passieren der Rieselplatten strömt. Dies bewirkt eine intensive Kühlung eines grossen Wasseranteiles durch die Rinnenanordnung, was hinsichtlich des insgesamt zu erzielenden Kühleffektes von Vorteil ist. ·

Fig. 3 macht ferner deutlich, dass die einzelnen Rinnen 4 zweckmässig sich nach unten erweiternde, keulenartige Gestalt haben. Die Erweiterung nach unten ist insofern günstig, als Verstopfungen der Rinnen 4 durch nicht zu vermeidende Ablagerungen entgegengewirkt wird und das Wasser über die ganze Länge in starkem Strom die Rinnen durchfliessen kann. Ein zweckmässiges Verhältnis zwischen kleinster Rinnenbreite k am oberen Eintrittsende und grösster Rinnenbreite g am unteren Austrittsende jeder Rinne liegt in der Grössenordnung von 1,5.

Bei der Ausführung nach Fig. 4 sind Rinnen 4 einer solchen Breite vorgesehen, die ein Füllen der Rinnen mit Wasser im Betrieb aufgrund der Kapillarwirkung nicht mehr ermöglichen. Im normalen Betrieb wird also in diesen Rinnen Luft enthalten sein. Diese Luft wird jedoch in ihrer Bewegung durch das herabrieselnde Wasser gehemmt und im Grenzfall sogar zum Stillstand oder zu einer Strömung in Gegenrichtung gebracht. Die in den Rinnen strömende Luftmenge wird also aufgrund dieses Sachverhaltes an einem wirkungsvollen Stoff- und Wärmeaustausch gehindert, so dass auch in diesem Fall der Nasskühlanteil vermindert und der Trockenanteil erhöht wird.

Bei der Ausführung nach Fig. 5 sind die Rinnen 4, die sowohl in kleiner Breite wie bei Fig. 2 als auch mit grösserer Breite wie bei Fig. 4 ausgebildet sein können, horizontal angeordnet. Die unteren Seitenwände 7 ragen über die oberen Seitenwände 8 der Rinnen hinaus, und die unteren und oberen Seitenwände 7, 8 sind jeweils durch ein überhängendes Wandstück 9 miteinander verbunden. Bei dieser Anordnung entsteht ein Wasserschwall 10, der auf die überkragende untere Wand 9 auftrifft und die dahinter liegenden Rinnenteile gegenüber der ausströmenden Luft absperrt. Auch auf diese Weise wird also eine Verschlechterung des Nasskühleffektes und eine Erhöhung des Trockenkühleffektes aufgrund der durch die Rinnen vergrösserten Oberfläche auf der Trockenseite (in Fig. 5 rechts) erreicht. Dieser Effekt wird noch dadurch begünstigt, dass die Luft hinter den Rinnen 4 auf der Trockenseite Turbulenzballen 11 bildet. Die Turbulenzeinengung sollte jedoch nicht so stark sein, dass die Turbulenzballen die gegenüberliegende Nassseite der nächstfolgenden Platte erreichen, um dort nicht den Nasskühleffekt zu verbessern. Aus diesem Grunde ist bei der Ausführung nach Fig. 5 die Rinnentiefe beschränkt, beispielsweise auf etwa 1/4 des Abstandes d zwischen benachbarten Rieselplatten, bei d = 20 mm also auf etwa 5 mm.

Bei den Ausführungen nach den Fig. 6 und 7 sind auf den Aussenseiten der Rinnen, die nicht notwendig vertikal angeordnet sein müssen, Rippen 13 bzw. 14 quer zur Strömungsrichtung der Luft auf der Trockenseite angeordnet, um im nahen Wandbereich der Trockenseite Turbulenzen zu erzeugen.

Bei der Ausführung nach Fig. 6, bei welcher die Luft in Längsrichtung der Rinnen 4 strömt, sind die Rippen 13 quer auf den Aussenseiten der Rinnen 4 angeordnet, während bei der Ausführung nach Fig. 7, bei welcher die Luft quer zur Längsrichtung der Rinnen 4 strömt, in Längsrichtung der Rinnen verlaufende Rippen 14 auf den Aussenseiten der Rinnen angeordnet sind.

Die in den Figuren 8 und 9 gezeigte Rieselplatte hat eine Anordnung mit sechseckigen Waben 15, die nach Art eines Wabenmusters miteinander verbunden sind. Die Rinnen dieser Waben 15 haben eine im Vergleich zum Abstand d zweier benachbarter Rieselplatten vergleichsweise geringe Tiefe t bis zu t=d/4, um zu erreichen, dass auf der Trockenseite (in Fig. 9 jeweils die linke Seite der beiden dargestellten Platten) erzeugte Turbulenzen von der Nassseite (in Fig. 9 jeweils die rechte Seite der beiden dargestellten Platten) ferngehalten werden. Die Wabenanordnung gemäss den Figuren 8 und 9 ist im Hinblick auf eine Beteiligung sämtlichen Wassers an einer Rinnendurchströmung besonders günstig.

Bei der Ausführung nach Fig. 10 sind zwei Rieselplattenanordnungen 17 in Konfiguration jeweils eines auf den Kopf gestellten U (im Querschnitt gesehen) vorgesehen. Zu den Aussenseiten dieser U hin sich öffnende und also zu den Innenseiten hin eingebuchtete Rinnen 4 haben die Gestalt beispielsweise der Rinnen gemäss Fig. 3 in übereinander angeordneten, versetzten Gruppen. Bei Berieselung von oben werden also jeweils die gegenüberliegenden Aussenseiten der beiden U-Anordnungen 17 befeuchtet, während die Innenseiten trocken bleiben. Im Querstrom durch die Plattenanordnungen geleitete Luft hat also einen erhöhten Trockenkühleffekt auf den Innenseiten der U-Anordnungen 17, während der Nasskühleffekt auf den Aussenseiten der beiden U-Anordnungen aufgrund der eingebuchteten, mit Wasser durchspülten Rinnen 4 verringert ist.

Bei der Ausgestaltung nach Fig. 11 ist über einer Anordnung einer Rieselplatte mit Rinnen ähnlich Fig. 3, deren Rinnen jedoch mit den Rinnen der jeweils darunter angeordneten Gruppe über Schrägkanäle 18 verbunden sind, ein Kamm 19 mit Tropfnasen 20 angeordnet. Diese Tropfnasen sind vertikal gerade fluchtend mit den Rinnen 4 der obersten Gruppe vorgesehen, so dass das Wasser gut in diese Rinnen eingeleitet wird.

Die beschriebenen Rieselplatten können aus Blech, wegen ihrer durch die Rinnen versteiften Konstruktion jedoch aus einem leichteren Material, wie Kunststoff, gefertigt sein, der überdies korrosionsfester als üblicherweise verwendetes Blech ist. Kunststoff ist für die Fertigung der beschriebenen Rieselplatten auch deshalb besonders geeignet, weil ein Ausformen der Rinnen in Kunststoff billiger als das Ausformen entsprechender Rinnen in Blech sein dürfte.

Es sind auch Ausführungsformen möglich, bei denen die Rinnen nicht parallel angeordnet sind oder bei denen anstatt Rinnen Einbuchtungen von kegel- oder pyramidenförmiger Gestalt vorgesehen sind. Immer sollte aber die Gestalt der Einbuchtungen so sein, dass ihre Innenwände von Wasser beströmbar sind.

**Patentansprüche**

1. Vorrichtung zum Abkühlen von Kühlwasser, insbesondere in Kühltürmen, mit im wesentlichen parallel angeordneten Rieselplatten (1), auf deren einen Seiten, – den Nasseiten –, oben aufgesprühtes Wasser nach unten rieselt und deren andere Seiten, – die Trockenseiten –, trockengehalten sind, wobei jeweils benachbarte Rieselplatten Strömungskanäle zwischen sich bilden, durch die kühlende Luft strömt, dadurch gekennzeichnet, dass die Rieselplatten (1) mit Rinnen (4) versehen sind, die aus der Nassseite heraus zur Trockenseite hin eingebuchtet sind, wobei die Trockenfläche um die Fläche der Rinnenaussenwände vergrössert wird.

2. Vorrichtung nach Anspruch 1, dadurch gekennzeichnet, dass parallele vertikale Rinnen einer Länge (1) zwischen 30 und 300 mm vorgesehen sind.

3. Vorrichtung nach Anspruch 2, dadurch gekennzeichnet, dass die Rinnen sich nach unten derart erweitern, dass ihre grösste Rinnenbreite (b) am unteren Ende in der Grössenordnung des 1,5fachen der kleinsten Rinnenbreite am oberen Ende beträgt.

4. Vorrichtung nach Anspruch 2 oder 3, dadurch gekennzeichnet, dass jede Rieselplatte übereinander angeordnete Gruppen von Rinnen (4) aufweist, die seitlich zueinander versetzt angeordnet sind (Fig. 3).

5. Vorrichtung nach einem der Ansprüche 1 bis 4, dadurch gekennzeichnet, dass die Scheitel der Rinnen einen Abstand (a) von der benachbarten Rieselplatte haben, der mindestens der üblichen Wasserfilmstärke entspricht.

6. Vorrichtung nach einem der Ansprüche 2 bis 5, dadurch gekennzeichnet, dass die Rinnen (4) sich zu ihrem Scheitel hin verjüngen und dass die mittlere freie Rinnenbreite (b) zwischen 1 und 5 mm liegt.

7. Vorrichtung nach einem der Ansprüche 2 bis 6, dadurch gekennzeichnet, dass die Rinnentiefe (t) bei Anordnung der Rinnen parallel zum Luftstrom zwischen 5 und 50 mm (Fig. 2) und bei Anordnung der Rinnen quer zum Luftstrom bis zu 7 mm beträgt (Fig. 9).

8. Vorrichtung nach Anspruch 1 oder 5 bis 7, dadurch gekennzeichnet, dass die unteren Seitenwände (7) der horizontalen Rinnen (4) gegenüber den oberen Seitenwänden (8) zur Bildung einer Auffangfläche für von oben herabrieselndes Wasser (10) vorspringen (Fig. 5).

9. Vorrichtung nach einem der Ansprüche 1 bis 8, dadurch gekennzeichnet, dass die Rinnen in Zick-Zack- oder Wellenform verlaufen.

10. Vorrichtung nach einem der Ansprüche 1 bis 9, dadurch gekennzeichnet, dass die Rinnen ein Wabenmuster (15) bilden.

11. Vorrichtung nach einem der Ansprüche 1 bis 10, dadurch gekennzeichnet, dass die Rinnen in den Rieselplatten jeweils zur gleichen Seite hin gerichtet sind.

12. Vorrichtung nach einem der Ansprüche 1 bis 11, dadurch gekennzeichnet, dass bei Anwendung des Querstromprinzips die Nassseiten und die Trockenseiten der Rieselplatten (17) jeweils einander zugewandt sind (Fig. 10).

13. Vorrichtung nach einem der Ansprüche 1 bis 12, dadurch gekennzeichnet, dass die trockenen Seiten der Rinnen Rippen (13, 14) geringer Höhe tragen, welche quer zum Luftstrom stehen und der Turbulenzerzeugung dienen. (Fig. 6).

**Revendications**

1. Dispositif pour refroidir de l'eau de refroidissement, notamment dans des tours de refroidissement, comportant des plaques de ruissellement (1) disposées essentiellement parallèlement, sur un des côtés desquels – les côtés humides – de l'eau projetée en haut ruisselle vers le bas et dont les autres côtés – les côtés secs – sont maintenus secs, des plaques de ruissellement respectivement adjacentes formant entre elles des canaux d'écoulement dans lesquels s'écoule l'air de refroidissement, caractérisé en ce que les plaques de ruissellement (1) sont pourvues de rigoles (4) qui sont disposées en saillie du côté humide vers le côté sec, auquel cas la surface sèche est augmentée de la surface des parois extérieures de rigoles.

2. Dispositif selon la revendication 1, caractérisé en ce qu'il est prévu des rigoles verticales parallèles ayant une longueur (1) comprise entre 30 et 300 mm.

3. Dispositif selon la revendication 2, caractérisé en ce que les rigoles s'élargissent vers le bas de telle sorte que leur largeur maximale (b) à l'extrémité inférieure est d'un ordre de grandeur correspondant à 1,5 fois la largeur minimale à l'extrémité supérieure.

4. Dispositif selon l'une des revendications 2 ou 3, caractérisé en ce que chaque plaque de ruissellement comporte des groupes de rigoles (4) placés l'un au-dessus de l'autre et qui sont disposés avec un décalage latéral mutuel (fig. 3).

5. Dispositif selon l'une des revendications 1 à 4, caractérisé en ce que les sommets des rigoles sont espacés de la plaque de ruissellement adjacente d'une distance (a) qui correspond au moins à l'épaisseur classique d'un film d'eau.

6. Dispositif selon l'une des revendications 2 à 5, caractérisé en ce que les rigoles (4) diminuent de section en direction de leur sommet et en ce que la largeur moyenne libre de rigole (b) est comprise entre 1 et 5 mm.

7. Dispositif selon l'une des revendications 2 à 6 caractérisé en ce que la profondeur de rigole (t) est comprise entre 5 et 50 mm dans le cas d'une disposition de rigoles parallèlement au courant d'air (fig. 2) et atteint jusqu'à 7 mm dans le cas d'une disposition de rigoles perpendiculairement au courant d'air (fig. 9).

8. Dispositif selon l'une des revendications 1 ou 5 à 7, caractérisé en ce que les parois latérales inférieures (7) des rigoles horizontales (4) font saillie par rapport aux parois latérales supérieures (8) de façon à former une surface collectrice de l'eau (10) ruisselant du haut vers le bas (fig. 5).

9. Dispositif selon l'une des revendications 1 à 8, caractérisé en ce que les rigoles ont une forme en zig zag ou ondulée.

10. Dispositif selon l'une des revendications 1 à 9, caractérisé en ce que les rigoles forment un motif en nids d'abeilles.

11. Dispositif selon l'une des revendications 1 à 10, caractérisé en ce que les rigoles sont orientées dans les plaques de ruissellement à chaque fois du même côté.

12. Dispositif selon l'une des revendications 1 à 11, caractérisé en ce que, lors de l'application du principe de l'écoulement transversal, les côtés humides et les côtés secs des plaques de ruissellement (12) sont respectivement tournés les uns vers les autres (fig. 10).

13. Dispositif selon l'une des revendications 1 à 12, caractérisé en ce que les côtés secs des rigoles portent des nervures (13, 14) de faible hauteur qui sont orientées perpendiculairement au courant d'air et qui servent à produire une turbulence (fig. 6).

**Claims**

1. Device for cooling cooling water, in particular in cooling towers, comprising trickler plates (1) substantially arranged in parallel, along one side of each of which – the wet side – water sprayed from the top tricklers down, while the other side – the dry side – is kept dry, two adjacent trickler plates each forming ducts through which the cooling air flows, characterized in that the trickler plates (1) are provided with grooves (4) recessed from the wet side in direction to the dry side, whereby the dry surface is enlarged by the surfaces of the outer walls of the grooves.

2. Device as claimed in claim 1, characterized in that parallel vertical grooves of a length (1) between 30 and 300 mm are provided.

3. Device as claimed in claim 2, characterized in that the grooves diverge towards the bottom such that their greatest width (b) at the lower end of the groove is in the order of 1,5-times the smallest groove width at the upper end.

4. Device as claimed in claim 2 or 3, characterized in that each trickler plate comprises groups of grooves (4) disposed one above the other and laterally offset with respect to one another (fig. 3).

5. Device as claimed in one of claims 2 to 4, characterized in that the apices of the grooves are spaced from the adjacent trickler plate by a distance (a) corresponding at least to the usual water film thickness.

6. Device as claimed in one of claims 2 to 5, characterized in that the grooves (4) converge towards their apex, and in that the mean free groove width (b) lies between 1 and 5 mm.

7. Device as claimed in one of claims 2 to 6, characterized in that the groove depth (t) lies between 5 and 50 mm when the grooves are arranged in parallel with the flow of air (fig. 2) and that it amounts to up to 7 mm when the grooves are arranged transversely of the flow of air (fig. 9).

8. Device as claimed in claim 1 or 5 to 7, characterized in that the lower sidewalls (7) of the horizontal grooves (4) project with respect to the upper side-walls (8) of the same so as to form collecting surfaces for water (10) trickling down from above (fig. 5).

9. Device as claimed in one of claims 1 to 8, characterized in that the grooves form a zig-zag or wave shape.

10. Device as claimed in one of claims 1 to 9, characterized in that the grooves form a honeycomb pattern (15).

11. Device as claimed in one of claims 1 to 10, characterized in that the grooves in the trickler plates all are oriented in the same direction.

12. Device as claimed in one of claims 1 to 11, characterized in that, when the cross flow principle is applied, the wet sides and the dry sides of the trickler plates (17) face each other, respectively (fig. 10).

13. Device as claimed in one of claims 1 to 12, characterized in that the dry sides of the grooves carry fins (13, 14) of little height, extending transversely of the flow of air and serving to create turbulences (fig. 6).

FIG. 1

FIG. 2

FIG. 3

FIG. 4

FIG. 5

FIG. 6

FIG. 7

FIG. 8

FIG. 9

FIG. 10

FIG. 11